# EUROPÄISCHE PATENTANMELDUNG

(11) **EP 4 434 650 A1**
(43) Veröffentlichungstag der Anmeldung: **25.09.2024**
(21) Anmeldenummer: 23162871.0
(22) Anmeldetag: 20.03.2023
(51) Int. Cl.: B21D 7/022, B26D 5/10, B26F 1/36, B21D 28/26, B21D 28/32

(54) **BIEGEVORRICHTUNG**

(71) Anmelder: Geberit International AG, 8645 Jona (CH)
(72) Erfinder: RÜEGG, Urs, 8645 Jona (CH); CARIGIET, Dario, 8712 Stäfa (CH)
(74) Vertreter: Frischknecht, Harry Ralph

(57) **Zusammenfassung**

Eine Biegevorrichtung (1) zur Biegung von einem Rohr (R) mit einem Isolationsmantel (I), umfassend eine Biegematrizenanordnung (2) mit mindestens einer Biegematrize (3),
wobei die mindestens eine Biegematrize (3) einen mit Seitenwänden (4, 5) teilweise begrenzten Aufnahmeraum (6) bereitstellt, welcher Aufnahmeraum (6) eine Zugangsöffnung (7) aufweist, über welche das Rohr (R) mit dem Isolationsmantel (I) in den Aufnahmeraum (6) für den Biegevorgang einlegbar ist,
wobei mindestens eine Biegefläche (8) im Aufnahmeraum (6) angeordnet ist, welche sich um eine Mittelachse (M) teilweise herum erstreckt, und
wobei mindestens eine Verdrängungsausnehmung (9) derart angeordnet ist, dass diese den Aufnahmeraum (6) vergrössert, so dass der Isolationsmantel (I) beim Biegevorgang in die Verdrängungsausnehmung (9) verdrängbar ist.

## Beschreibung

### TECHNISCHES GEBIET

Die vorliegende Erfindung betrifft eine Biegevorrichtung zum Biegen von Rohren, die einen Isolationsmantel aufweisen, nach Anspruch 1 und eine Betätigungsanordnung zur Betätigung von zwei Matrizen nach Anspruch 13.

### STAND DER TECHNIK

Aus dem Stand der Technik sind Rohrbiegevorrichtungen bekannt geworden. Beispielsweise offenbart die US 8,375,764 eine Biegevorrichtung für ein Rohr, so dass das Rohr um einen Winkel von beispielsweise 90° gebogen werden kann.

Aus dem Stand der Technik sind Rohre für Wasserleitungen bekannt geworden, welche durch einen Isolationsmantel umhüllt werden. Die Biegevorrichtung nach der US 8,375,764 weist den Nachteil auf, dass derartige Rohre nicht oder nur mit Qualitätseinbussen gebogen werden können.

### DARSTELLUNG DER ERFINDUNG

Ausgehend von diesem Stand der Technik liegt der vorliegenden Erfindung eine Aufgabe zugrunde, eine Biegevorrichtung zur Biegung von einem Rohr mit einem Isolationsmantel anzugeben, welche die Nachteile des Standes der Technik überwindet. Insbesondere ist es eine besonders bevorzugte Aufgabe, eine Biegevorrichtung für ein Rohr mit einem Isolationsmantel anzugeben, mit welcher das Rohr störungsfrei, insbesondere knickfrei, gebogen werden kann.

Diese Aufgabe und andere Aufgaben löst der Gegenstand nach Anspruch 1. Demgemäss umfasst eine Biegevorrichtung zur Biegung von einem Rohr mit einem Isolationsmantel, eine Biegematrizenanordnung mit mindestens einer Biegematrize. Die mindestens eine Biegematrize stellt einen teilweise mit Seitenwänden begrenzten Aufnahmeraum bereit, welcher Aufnahmeraum eine Zugangsöffnung aufweist, über welche das Rohr mit dem Isolationsmantel in den Aufnahmeraum für den Biegevorgang einlegbar ist. Mindestens eine Biegefläche ist im Aufnahmeraum angeordnet, welche sich um eine Mittelachse teilweise herum erstreckt. Weiterhin ist mindestens eine Verdrängungsausnehmung derart angeordnet, dass diese den Aufnahmeraum vergrössert, so dass der Isolationsmantel beim Biegevorgang in die Verdrängungsausnehmung verdrängbar ist.

Durch die Möglichkeit der Verdrängung des Isolationsmantels in die Verdrängungsausnehmung wird sichergestellt, dass das Rohr mit einem minimalen Isolationsmantelvolumen an der Biegefläche anliegt, wodurch sichergestellt wird, dass das Rohr ohne negative Einwirkung, insbesondere knickfrei, gebogen werden kann.

Ein weiterer Vorteil ist, dass durch die Verdrängung des Isolationsmantel, der Isolationsmantel schonend behandelt wird.

Die Biegefläche kann eine gewisse Breite aufweisen oder aber sehr schmal ausgebildet sein, wobei dann die Biegefläche eine Biegekante ist. Die Biegefläche erstreckt sich vorzugsweise um ein Bogensegment von 90° um die Mittelachse. Je nach Anwendung sind grössere oder kleinere Winkel auch denkbar.

Die Biegefläche kann parallel oder winklig geneigt zur Mittelachse verlaufen.

Vorzugsweise weist der Querschnitt der mindestens einen Verdrängungsausnehmung bei eingelegtem Rohr eine Fläche von 60% bis 120% von der Fläche des Aufnahmeraums zwischen dem eingelegten Rohr und der Zugangsöffnung auf.

Vorzugsweise erstreckt sich die Verdrängungsausnehmung entlang der Biegefläche. Mit anderen Worten gesagt verlaufen die Verdrängungsausnehmung und die Biegefläche im Wesentlichen parallel zueinander. Die Verdrängungsausnehmung kann dabei direkt neben der Biegefläche liegen oder in einem in Richtung der Mittelachse gesehen Abstand beanstandet zur Biegefläche.

Vorzugsweise schliesst sich die Biegefläche der Verdrängungsausnehmung über eine konvexe Rundung an. Die konvexe Rundung ist derart ausgebildet, dass ein sanfter Übergang von der Biegefläche zur Verdrängungsausnehmung bereitgestellt werden kann.

Vorzugsweise sind zwei oder mehr Biegeflächen parallel zueinander angeordnet. Hierdurch wird das Rohr optimal in der Aufnahme abgestützt und die Kraft, die beim Biegevorgang entsteht, kann über eine grössere Fläche verteilt werden.

Vorzugsweise sind zwei oder mehr Verdrängungsausnehmungen angeordnet. Hierdurch kann der Raumbereich, in welchen der Isolationsmantel verdrängt werden kann, vergrössert werden.

Vorzugsweise ist pro Biegefläche eine Verdrängungsausnehmung angeordnet. In einer besonders bevorzugten Ausführungsform bilden jeweils eine Biegefläche und eine Verdrängungsausnehmung ein Paar, wobei vorzugsweise zwei Paare angeordnet sind.

Vorzugsweise ist quer zur Mittelachse gesehen mindestens eine Biegefläche zwischen zwei beabstandet zueinander liegenden Verdrängungsausnehmungen angeordnet.

Vorzugsweise liegen zwei Biegeflächen zwischen den beiden Verdrängungsausnehmungen. Besonders bevorzugt sind die beiden Biegeflächen winklig geneigt zur Mittelachse orientiert. Die Biegeflächen liegen dabei derart zueinander, dass eine V-förmige Aufnahme geschaffen werden kann.

Vorzugsweise weist der Aufnahmeraum von der Zugangsöffnung her gesehen eine obere Seitenwand, eine beabstandet zur oberen Seitenwand liegende untere Seitenwand, und einen den Aufnahmeraum nach hinten hin abschliessende und gegenüber der Zugangsöffnung liegende Rückwand auf. Die Verdrängungsausnehmung erstreckt sich vom Aufnahmeraum her gesehen in die obere Seitenwand und/oder die untere Seitenwand und/oder die Rückwand hinein. Die Biegefläche ist vorzugsweise Teil der Rückwand.

Mit anderen Worten gesagt erstreckt sich die Verdrängungsausnehmung vom Aufnahmeraum her in die Biegematrize hinein.

Vorzugsweise erstreckt sich die Verdrängungsausnehmung im Querschnitt entlang der Mittelachse in einem ersten Abschnitt als konisch verlaufendes Flächensegment und in einem zweiten Abschnitt als gerundetes Flächensegment. Durch das gerundete Flächensegment kann der Raumbereich optimal vergrössert werden.

Vorzugsweise ist die Biegematrize zweiteilig mit einem ersten Matrizenteil und einem zweiten Matrizenteil ausgebildet.

Vorzugsweise liegt das erste Matrizenteil auf einer Seite einer imaginären Ebene und das zweite Matrizenteil liegt auf einer anderen Seite der imaginären Ebene. Die imaginäre Ebene erstreckt sich rechtwinklig zur Mittelachse und mittig durch den Aufnahmeraum hindurch.

In einer Variante weist jedes Matrizenteil die mindestens eine Biegefläche auf; wobei entweder jedes Matrizenteil die mindestens eine Verdrängungsausnehmung aufweist, oder wobei nur eines der beiden Matrizenteile die mindestens eine Verdrängungsausnehmung aufweist.

In einer anderen Variante weist nur eines der beiden Matrizenteile die mindestens eine Verdrängungsausnehmung auf; wobei entweder jedes Matrizenteil die mindestens eine Biegefläche aufweist, oder wobei nur eines der beiden Matrizenteile die mindestens eine Biegefläche aufweist.

Vorzugsweise stehen die beiden Matrizenteile über eine Führungsstruktur bewegbar zueinander miteinander in Verbindung. Die beiden Matrizenteile sind über eine Betätigungsanordnung mit einem Betätigungselement aufeinander zu bewegbar, wobei die Führungsstruktur vorzugsweise ein Rückstellelement aufweist, welches die beiden Matrizenteile voneinander weg drückt.

Vorzugsweise liegen die Matrizenteile vor dem Einlegen des Rohrs in den Aufnahmeraum in einer Ausgangslage und die beiden Matrizenteile werden vor dem Biegevorgang in eine Biegelage aufeinander zu bewegt, derart, dass die Isolation des eingelegten Rohrs teilweise komprimiert wird und teilweise in die Verdrängungsausnehmung gedrückt wird und dass das Rohr durch die Matrizenteile geklemmt wird.

Vorzugsweise liegen die Matrizenteile in der Biegelage beabstandet zueinander oder sind über Kontaktflächen miteinander in Kontakt bringbar. Der Abstand zwischen den beiden Matrizenteilen ist im Wesentlichen vom Durchmesser des Rohrs abhängig. Bei einem minimalen Rohrdurchmesser können die beiden Matrizenteile in der Biegelage "auf Block" gefahren werden, so dass die beiden Matrizenteile über die Kontaktflächen miteinander in Kontakt sind.

Die Betätigungsanordnung für die hierin beschriebene Biegevorrichtung umfasst eine sich entlang einer Lagerstangenachse erstreckende Lagerstange, die über einen Lagerabschnitt mit dem ersten Matrizenteil in Verbindung steht und sich durch eine Öffnung am zweiten Matrizenteil hindurch erstreckt, und eine Schwenkstange, die sich entlang einer Schwenkstangenachse erstreckt, und die gegenüber dem Lagerabschnitt an der Lagerstange anordnet ist. Die Schwenkstangenachse verläuft rechtwinklig zur Lagerstangenachse. Das genannte Betätigungselement steht schwenkbar mit der Schwenkstange in Verbindung. Das Betätigungselement weist eine Kontaktfläche auf, mit welcher das Betätigungselement auf eine Aktuatorfläche am zweiten Matrizenteil wirkt, wobei die Kontaktfläche mindestens zwei Flächensegmente aufweist, deren Abstand zur Schwenkstangenachse jeweils unterschiedlich ist, derart, dass wenn das eine Flächensegment mit der Aktuatorfläche in Kontakt ist, der Abstand zwischen den Matrizenteilen unterschiedlich ist, als wenn ein anderes der Flächensegmente mit der Aktuatorfläche in Kontakt ist.

Eine Betätigungsanordnung zur Bereitstellung einer Bewegung zwischen einem ersten Matrizenteil und einem zweiten Matrizenteil ist in Anspruch 13 angegeben. Die Betätigungsanordnung nach Anspruch 13 umfasst eine sich entlang einer Lagerstangenachse erstreckende Lagerstange, die über einen Lagerabschnitt mit ersten Matrizenteil in Verbindung steht und sich durch eine Öffnung am zweiten Matrizenteil hindurch erstreckt, und eine Schwenkstange, die sich entlang einer Schwenkstangenachse erstreckt, und die gegenüber dem Lagerabschnitt an der Lagerstange anordnet ist. Die Schwenkstangenachse verläuft rechtwinklig zur Lagerstangenachse. Das genannte Betätigungselement steht schwenkbar mit der Schwenkstange in Verbindung. Das Betätigungselement weist eine Kontaktfläche auf, mit welcher das Betätigungselement auf eine Aktuatorfläche am zweiten Matrizenteil wirkt, wobei die Kontaktfläche mindestens zwei Flächensegmente aufweist, deren Abstand zur Schwenkstangenachse jeweils unterschiedlich ist, derart, dass wenn das eine Flächensegment mit der Aktuatorfläche in Kontakt ist, der Abstand zwischen den Matrizenteilen unterschiedlich ist, als wenn ein anderes der Flächensegmente mit der Aktuatorfläche in Kontakt ist.

In der Folge werden optionale Merkmale für die oben beschriebenen Betätigungsanordnungen beschrieben:
Vorzugsweise weist das Betätigungselement einen Hebelabschnitt auf. Der Hebelabschnitt erstreckt sich dabei im Wesentlichen quer von der Schwenkstangenachse weg.

Die Flächensegmente können als ebene oder als gerundete Flächensegmente ausgebildet sein.

Vorzugsweise ist zwischen den Flächensegmenten eine Übergangsfläche angeordnet, wobei die Übergangsfläche mit einer Rundung gerundet ausgebildet ist. Die Rundung ist derart ausgebildet, dass der Abstand zwischen der Rundung und der Schwenkstangenachse sich zwischen den beiden Flächensegmenten vorzugsweise kontinuierlich verändert.

Vorzugsweise weist das Betätigungselement mindestens eine Markierung auf, welche bei entsprechender Stellung des Betätigungselements den Abstand zwischen den beiden Matrizenteilen vorgibt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Biegevorrichtung gemäss einer besonders bevorzugten Ausführungsform in einer Ausgangslage;
- Fig. 2: eine Seitenansicht der Figur 1;
- Fig. 3: eine Seitenansicht der Biegevorrichtung nach den vorhergehenden Figuren in einer ersten Biegelage;
- Fig. 4: eine perspektivische Ansicht der Figur 3;
- Fig. 5a: eine Schnittdarstellung der Figuren 3 und 4 mit eingelegtem Rohr;
- Fig. 5b: eine Detailansicht der Figur 5a;
- Fig. 6: eine Seitenansicht der Biegevorrichtung nach den vorhergehenden Figuren in einer zweiten Biegelage;
- Fig. 7: eine perspektivische Ansicht der Figur 6;
- Fig. 8a: eine Schnittdarstellung der Figuren 6 und 7 mit eingelegtem Rohr; und
- Fig. 8b: eine Detailansicht der Figur 8a.

### BESCHREIBUNG BEVORZUGTER AUSFÜHRUNGSFORMEN

In den Figuren wird eine Biegevorrichtung 1 gemäss einer Ausführungsform der vorliegenden Erfindung gezeigt. Ebenfalls wird in den Figuren eine Betätigungsanordnung 17 gezeigt. Die Biegevorrichtung 1 kann mit der Betätigungsanordnung 17 ausgebildet sein. Sowohl die Betätigungsanordnung 17 als auch die Biegevorrichtung 1 können unabhängig voneinander ausgebildet sein. Die Betätigungsanordnung 17 kann bei anderen, hier nicht gezeigten Vorrichtungen eingesetzt werden, und die Biegevorrichtung 1 kann mit anderen, hier nicht gezeigten Betätigungsanordnungen betätigt werden.

Die Biegevorrichtung 1 dient zur Biegung von einem Rohr R mit einem Isolationsmantel I. Das Rohr R ist typischerweise aus Metall oder aus Verbundwerkstoff mit Metall und Kunststoff. Der Isolationsmantel I ist aus Schaumstoff. Der Isolationsmantel I umgibt das Rohr R aussenseitig und erstreckt sich typischerweise über dessen gesamten Länge.

Biegevorrichtung 1 umfasst eine Biegematrizenanordnung 2 mit mindestens einer Biegematrize 3. In der gezeigten Ausführungsform umfasst die Biegematrize 3 zwei Matrizenteile, nämlich ein erstes Matrizenteil 14 und ein zweites Matrizenteil 15. Es ist aber auch denkbar, dass die Biegematrize nur aus einem Matrizenteil besteht.

Die Biegematrize 3 stellt einen mit Seitenwänden 4, 5 teilweise begrenzten Aufnahmeraum 6 bereit. Der Aufnahmeraum 6 weist eine Zugangsöffnung 7 auf, über welche das Rohr R mit dem Isolationsmantel I in den Aufnahmeraum 6 für den Biegevorgang einlegbar ist.

Weiter ist im Aufnahmeraum 6 mindestens eine Biegefläche 8 angeordnet, welche sich um eine Mittelachse M teilweise herum erstreckt. Beim Biegevorgang wird das Rohr R mit dem Isolationsmantel I um die Biegefläche 8 herum gebogen. In der gezeigten Ausführungsform erstreckt sich die Biegefläche um einen Winkel von mindestens 90°, insbesondere von mindestens 100°, um die Mittelachse M herum. Der Winkel ist im Wesentlichen vom gewünschten Rohr-Biegewinkel abhängig. Je nach Materialisierung des Rohrs muss der Winkel etwas grösser sein als der Rohr-Biegewinkel, weil das Rohr nach erfolgtem Biegevorgang zurückfedern kann.

Weiter umfasst die Biegematrize 8 mindestens eine Verdrängungsausnehmung 9. Die mindestens eine Verdrängungsausnehmung 9 ist derart angeordnet, dass diese den Aufnahmeraum 6 vergrössert, so dass der Isolationsmantel I beim Biegevorgang in die Verdrängungsausnehmung 9 verdrängbar ist.

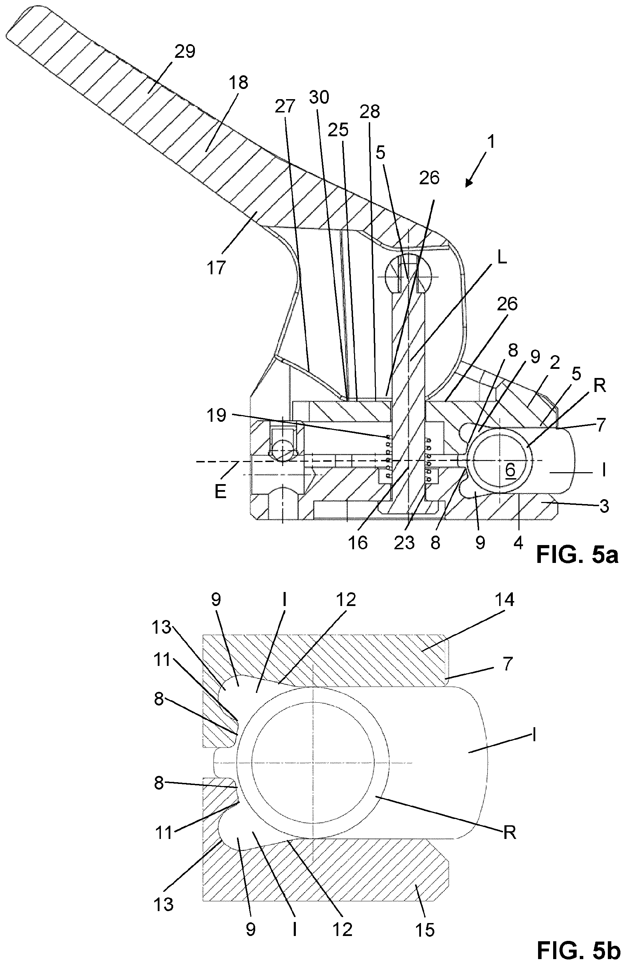

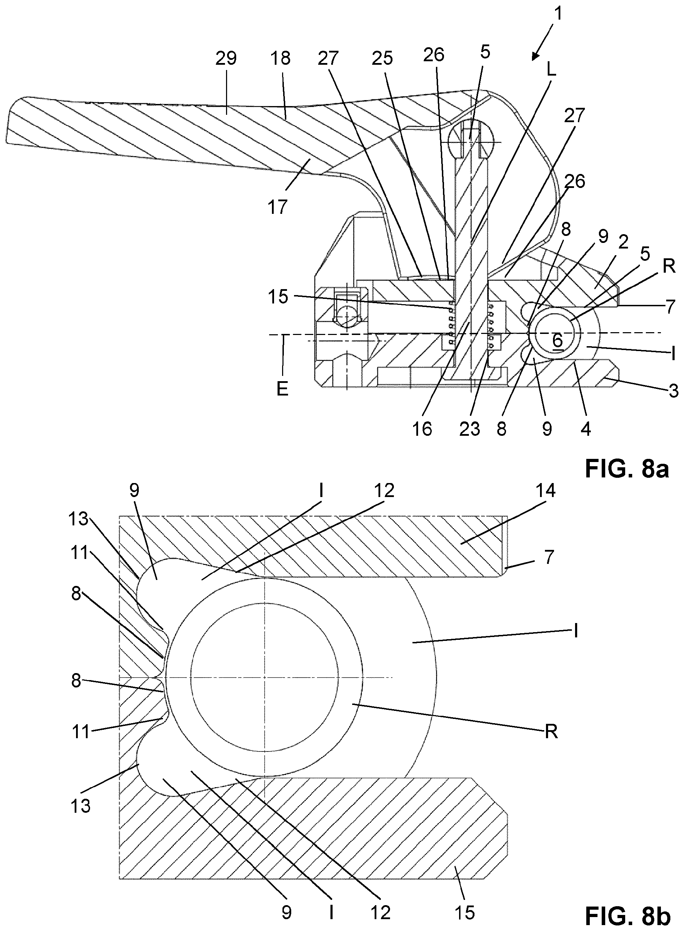

In den Figuren 5a, 5b und 8a, 8b wird die Verdrängung des Isolationsmantels I entsprechend dargestellt. Das Rohr R in den Figuren 5a, 5b weist einen grösseren Durchmesser auf als das Rohr R in den Figuren 8a, 8b. Im eingelegten Zustand wird der Isolationsmantel I in die mindestens eine Verdrängungsausnehmung 9 verdrängt. Das heisst, der Isolationsmantel I fliesst gewissermassen in die mindestens eine Verdrängungsausnehmung 9 hinein. Das Rohr R liegt indirekt über den Isolationsmantel I an der Biegefläche 8 an, wobei an dieser Stelle der Isolationsmantel I komprimiert ist. Weiter erstreckt sich der Isolationsmantel I nicht nur in die mindestens eine Verdrängungsausnehmung 9 hinein, sondern er wird auch über die Zugangsöffnung 7 nach aussen hin verdrängt.

Von den Figuren wird ersichtlich, dass sich die mindestens eine Verdrängungsausnehmung 9 entlang der mindestens einen Biegefläche 8 erstreckt. Das heisst, die mindestens eine Verdrängungsausnehmung 9 liegt benachbart neben der Biegefläche 8. In der gezeigten Ausführungsform geht die Verdrängungsausnehmung 9 über eine konvexe Rundung 10 zur Biegefläche 8 über. In der gezeigten Ausführungsform sind zwei Biegeflächen 8 und zwei Verdrängungsausnehmungen 9 angeordnet. Die beiden Biegeflächen 8 liegen dabei zwischen den beiden Verdrängungsausnehmungen 9.

Der Aufnahmeraum 6 weist von der Zugangsöffnung 7 her gesehen eine obere Seitenwand 4, eine beabstandet zur oberen Seitenwand 4 liegende untere Seitenwand 5, und eine den Aufnahmeraum 6 nach hinten hin abschliessende und gegenüber der Zugangsöffnung 7 liegende Rückwand 11 auf. Die beiden Seitenwände 4, 5 erstrecken sich von der Zugangsöffnung 7 zur Rückwand 11 hin. In der gezeigten Ausführungsform erstrecken sich die Verdrängungsausnehmungen 9 vom Aufnahmeraum 6 her gesehen in die jeweilige Seitenwand 4, 5 und in die Rückwand 11 hinein. Mit anderen Worten gesagt liegen die Verdrängungsausnehmungen 9 im Bereich des Übergangs von der Seitenwand 4, 5 zur Rückwand 11. An der Rückwand 11 liegt weiter die Biegefläche 11 bzw. je nach Ausbildung der Biegefläche 11 wird die Biegefläche 11 durch die Rückwand bereitgestellt.

Die Verdrängungsausnehmung 9 erstreckt sich hier im Querschnitt entlang der Mittelachse in einem ersten Abschnitt 12 als konisch verlaufendes Flächensegment und in einem zweiten Abschnitt 13 als gerundetes Flächensegment erstreckt. Das konisch verlaufende Flächensegment liegt dabei so, dass die lichte Weite zwischen den beiden Verdrängungsausnehmungen 9 mit zunehmender Tiefe von der Zugangsöffnung 7 in den Aufnahmeraum 6 grösser wird. Das gerundete Flächensegment ist als konkave Rundung ausgebildet. Das gerundete Flächensegment geht mit der konvexen Rundung 10 zur Biegefläche 8 über.

Der Aufnahmeraum 6 weist von der Zugangsöffnung 7 her gesehen einen Querschnitt auf, welcher bis zu Beginn des ersten Abschnitts konstant ist und sich dann aufgrund der Verdrängungsausnehmung 9 aufweitet. Durch den konstanten Querschnitt kann das Rohr R mit dem Isolationsmantel I während des Biegevorgangs gut entlang der Biegefläche 8 geführt werden. Hierbei gleitet das Rohr R mit zunehmendem Grad der Biegung weiter in den Aufnahmeraum 6 ein.

Vorzugsweise ist der Querschnitt der Verdrängungsausnehmung 9 über deren gesamte Länge um die Mittelachse M im Wesentlichen konstant. Am Beginn und am Ende der Verdrängungsausnehmung 9 verläuft die Verdrängungsausnehmung 9 vorzugsweise so, dass deren Querschnitt mit geringer werdenden Distanz zum Beginn bzw. zum Ende kontinuierlich kleiner.

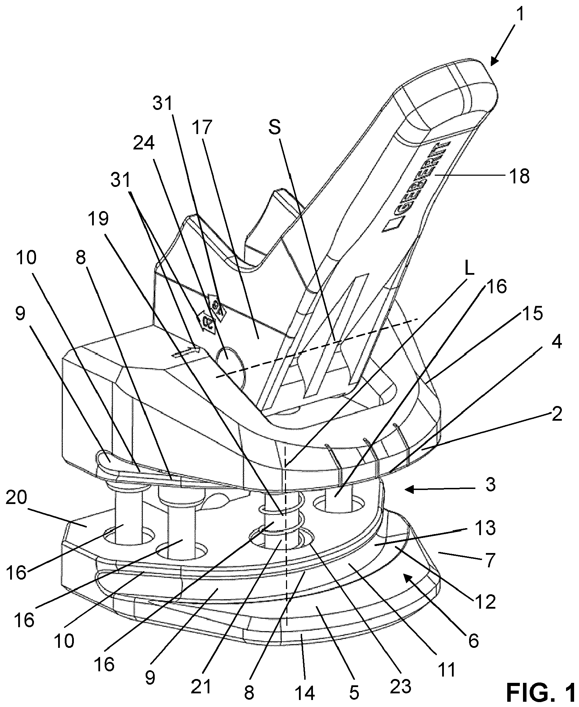

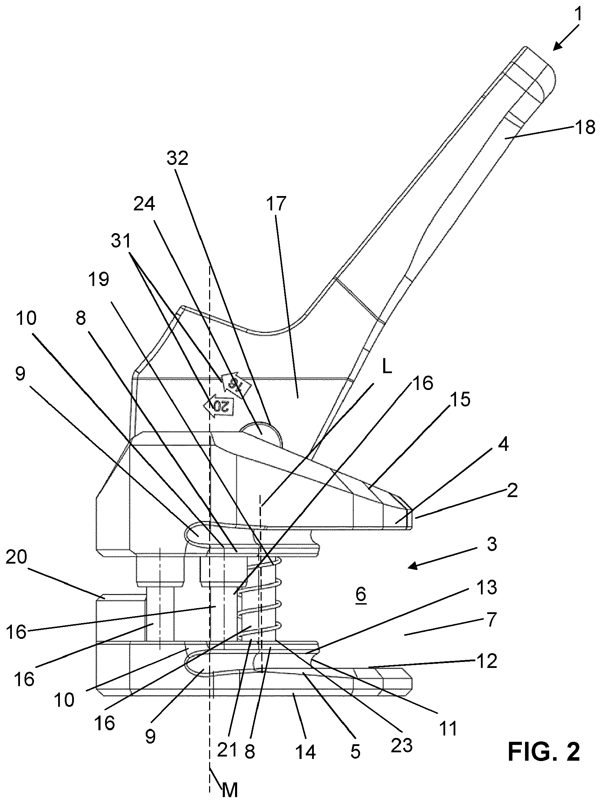

Wie oben bereits erwähnt, ist die Biegematrize 3 zweiteilig mit einem ersten Matrizenteil 14 und einem zweiten Matrizenteil 15 ausgebildet. Die beiden Matrizenteile 14, 15 lassen sich von einer Ausgangslage in eine Biegelage aufeinander zu bewegen und dann wieder von der Biegelage in die Ausgangslage voneinander weg bewegen. In den Figuren 1 und 2 wird die Ausgangslage gezeigt. In der Ausgangslage lässt sich das Rohr R mit dem Isolationsmantel I über die Zugangsöffnung 7 in den Aufnahmeraum 6 einlegen. Anschliessend werden die beiden Matrizenteile in die Biegelage bewegt und das Rohr R kann gebogen werden. Während dem Biegevorgang wird der Isolationsmantel I kontinuierlich in die Verdrängungsausnehmung 9 verdrängt.

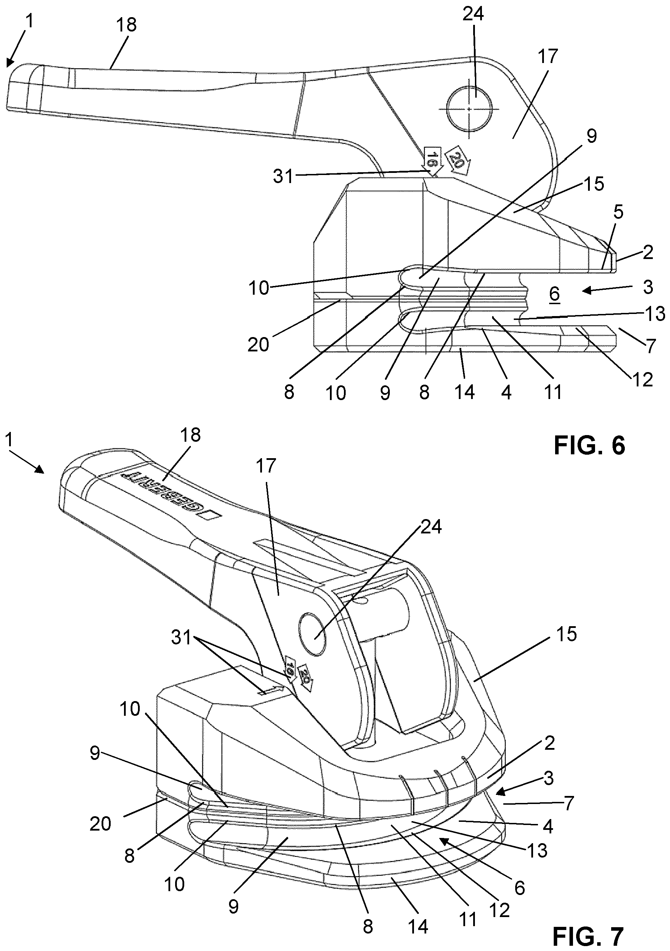

Das erste Matrizenteil 14 liegt auf einer Seite einer imaginären Ebene E und das zweite Matrizenteil 15 liegt auf einer anderen Seite der imaginären Ebene E. Die imaginäre Ebene E erstreckt sich rechtwinklig zur Mittelachse M und mittig durch den Aufnahmeraum 6 hindurch. Wenn die beiden Matrizenteile 14, 15 «auf Block» gefahren sind, so wie in den Figuren 6 bis 8b gezeigt, bildet die imaginäre Ebene E eine Trennebene zwischen den beiden Matrizenteilen 14, 15.

In der gezeigten Ausführungsform weist jedes Matrizenteil 14, 15 Biegefläche 8 und eine Verdrängungsausnehmung 9 auf.

In der gezeigten Ausführungsform stehen die beiden Matrizenteile 14, 15 über eine Führungsstruktur 16 bewegbar zueinander miteinander in Verbindung. Die Führungsstruktur 16 weist hier mehrere Führungsstifte auf, über die die Matrizenteile 14, 15 in Verbindung stehen. Das obere Matrizenteil 14 ist bezüglich den Führungsstiften bewegbar, und das untere Matrizenteil 15 ist fest zu den Führungsstiften gelagert.

Die beiden Matrizenteile 14, 15 sind über eine Betätigungsanordnung 17 mit einem Betätigungselement 18 von der Ausgangslage in die Biegelage aufeinander zu bewegbar. Weiter weist die Führungsstruktur 16 vorzugsweise ein Rückstellelement 19 auf, welches die beiden Matrizenteile 14, 15 voneinander weg drückt. Bei Wegfall der Betätigung mit dem Betätigungselement 18 werden die beiden Matrizenteile 14, 15 durch das Rückstellelement 19 wieder in die Ausgangslage. Wie erwähnt, liegen die Matrizenteile 14, 15 vor dem Einlegen des Rohrs R in den Aufnahmeraum 6 in der Ausgangslage, und die Matrizenteile 14, 15 werden vor dem Biegevorgang in die Biegelage aufeinander zu bewegt, derart, dass die Isolation I des eingelegten Rohrs R teilweise komprimiert wird und teilweise in die Verdrängungsausnehmung gedrückt wird, und dass das Rohr R durch die Matrizenteile 14, 15 gehalten wird.

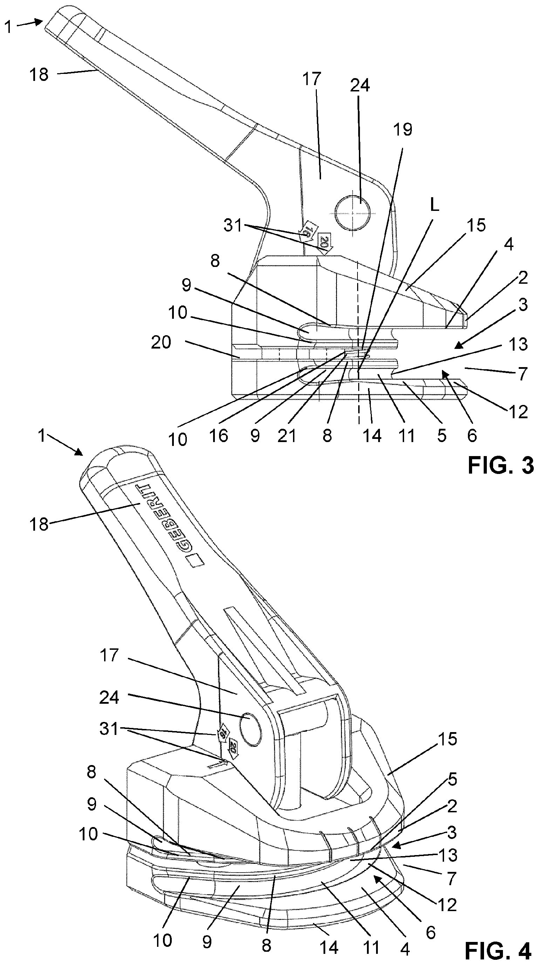

In der gezeigten Ausführungsform liegen die Matrizenteile 14, 15 in Abhängigkeit vom Rohrdurchmesser relativ zueinander. Beim grösseren Rohrdurchmesser nach den Figuren 3 bis 5b liegen die Matrizenteile 14, 15 in der Biegelage beabstandet zueinander und beim kleineren Durchmesser sind die beiden Matrizenteile 14, 15 in der Biegelage über Kontaktflächen 20 miteinander in Kontakt.

Die Betätigungsanordnung 17 umfasst eine sich entlang einer Lagerstangenachse L erstreckende Lagerstange 21, die über einen Lagerabschnitt 22 mit dem ersten Matrizenteil 14 in Verbindung steht und sich durch eine Öffnung 23 am zweiten Matrizenteil 15 hindurch erstreckt, und eine Schwenkstange 24, die sich entlang einer Schwenkstangenachse S erstreckt und die gegenüber dem Lagerabschnitt 22 an der Lagerstange 21 anordnet ist.

Die Schwenkstangenachse S verläuft rechtwinklig zur Lagerstangenachse L. Das Betätigungselement 18 steht schwenkbar mit der Schwenkstange 24 in Verbindung. Hierfür weist das Betätigungselement 18 eine Öffnung 32 auf, in welche die Schwenkstange 24 einragt.

Das Betätigungselement 18 weist eine Kontaktfläche 25 auf. Mit der Kontaktfläche 15 wirkt das Betätigungselement 18 auf eine Aktuatorfläche 26 am zweiten Matrizenteil 15. Die Kontaktfläche 25 weist mindestens zwei Flächensegmente 27, 28 auf, deren Abstand zur Schwenkstangenachse S unterschiedlich ist, derart, dass wenn das eine Flächensegment 27 mit der Aktuatorfläche 26 in Kontakt ist, der Abstand zwischen den Matrizenteilen 14, 15 unterschiedlich ist, als wenn ein anderes der Flächensegmente 28 mit der Aktuatorfläche 26 in Kontakt ist. Dies ist von den Figuren 5a und 8a gut ersichtlich.

Das Betätigungselement 18 weist einen Hebelabschnitt 29 auf. Der Hebelabschnitt 29 kann von einem Benutzer ergriffen werden und um die Schwenkachse S verschwenkt werden.

Die Flächensegmente 27, 28 sind in den gezeigten Ausführungsformen als ebene Flächensegmente ausgebildet. Eine Ausbildung als gerundete Flächensegmente ist auch denkbar.

Vorzugsweise ist zwischen den Flächensegmenten 27, 28 eine Übergangsfläche 30 angeordnet, wobei die Übergangsfläche 30 mit einer Rundung gerundet ausgebildet ist, wobei die Rundung derart ausgebildet ist, dass der Abstand zwischen der Rundung und der Schwenkstangenachse S sich zwischen den beiden Flächensegmenten 27, 28 vorzugsweise kontinuierlich verändert.

Vorzugsweise weist das Betätigungselement 18 mindestens eine Markierung 31 auf, welche bei entsprechender Stellung des Betätigungselements 18 den Abstand zwischen den beiden Matrizenteilen 14, 15 vorgibt.

**BEZUGSZEICHENLISTE**

| | | | |
|---|---|---|---|
| 1 | Biegevorrichtung | 28 | Flächensegment |
| 2 | Biegematrizenanordnung | 29 | Hebelabschnitt |
| 3 | Biegematrize | 30 | Übergangsfläche |
| 4 | Seitenwand | 31 | Markierung |
| 5 | Seitenwand | 32 | Öffnung |
| 6 | Aufnahmeraum | | |
| 7 | Zugangsöffnung | M | Mittelachse |
| 8 | Biegefläche | R | Rohr |
| 9 | Verdrängungsausnehmung | I | Isolationsmantel |
| 10 | konvexe Rundung | | |
| 11 | Rückwand | E | Ebene |
| 12 | erster Abschnitt | | |
| 13 | zweiter Abschnitt | L | Lagerstangenachse |
| 14 | erstes Matrizenteil | S | Schwenkstangenachse |
| 15 | zweites Matrizenteil | | |
| 16 | Führungsstruktur | | |
| 17 | Betätigungsanordnung | | |
| 18 | Betätigungselement | | |
| 19 | Rückstellelement | | |
| 20 | Kontaktfläche | | |
| 21 | Lagerstange | | |
| 22 | Lagerabschnitt | | |
| 23 | Öffnung | | |
| 24 | Schwenkstange | | |
| 25 | Kontaktfläche | | |
| 26 | Aktuatorfläche | | |
| 27 | Flächensegment | | |

## Patentansprüche

1. Biegevorrichtung (1) zur Biegung von einem Rohr (R) mit einem Isolationsmantel (I), umfassend eine Biegematrizenanordnung (2) mit mindestens einer Biegematrize (3),
wobei die mindestens eine Biegematrize (3) einen mit Seitenwänden (4, 5) teilweise begrenzten Aufnahmeraum (6) bereitstellt, welcher Aufnahmeraum (6) eine Zugangsöffnung (7) aufweist, über welche das Rohr (R) mit dem Isolationsmantel (I) in den Aufnahmeraum (6) für den Biegevorgang einlegbar ist,
wobei mindestens eine Biegefläche (8) im Aufnahmeraum (6) angeordnet ist, welche sich um eine Mittelachse (M) teilweise herum erstreckt, und
wobei mindestens eine Verdrängungsausnehmung (9) derart angeordnet ist, dass diese den Aufnahmeraum (6) vergrössert, so dass der Isolationsmantel (I) beim Biegevorgang in die Verdrängungsausnehmung (9) verdrängbar ist.

2. Biegevorrichtung (1) nach Anspruch 1, **dadurch gekennzeichnet, dass** sich die Verdrängungsausnehmung (9) entlang der Biegefläche (8) erstreckt, und/oder dass sich die Biegefläche (8) der Verdrängungsausnehmung (9) über eine konvexe Rundung (10) anschliesst.

3. Biegevorrichtung (1) nach Anspruch 1 oder 2, **dadurch gekennzeichnet, dass** zwei oder mehr Biegeflächen (8) parallel zueinander angeordnet sind; und/oder dass zwei oder mehr Verdrängungsausnehmungen (9) angeordnet sind; und/oder dass pro Biegefläche (8) eine Verdrängungsausnehmung (9) angeordnet ist.

4. Biegevorrichtung (1) nach einem der vorhergehenden Ansprüche, **dadurch gekennzeichnet, dass** quer zur Mittelachse (M) gesehen mindestens eine Biegefläche (8) zwischen zwei beabstandet zueinander liegenden Verdrängungsausnehmungen (9) angeordnet ist.

5. Biegevorrichtung (1) nach einem der vorhergehenden Ansprüche, **dadurch gekennzeichnet, dass** der Aufnahmeraum (6) von der Zugangsöffnung her gesehen eine obere Seitenwand (4), eine beabstandet zur oberen Seitenwand (4) liegende untere Seitenwand (5), und den Aufnahmeraum (6) nach hinten hin abschliessende und gegenüber der Zugangsöffnung (7) liegende Rückwand (11) aufweist, wobei sich die Verdrängungsausnehmung (9) vom Aufnahmeraum (6) her gesehen in die obere Seitenwand (4) und/oder die untere Seitenwand (5) und/oder die Rückwand (11) hinein erstreckt.

6. Biegevorrichtung (1) nach Anspruch 5, **dadurch gekennzeichnet, dass** sich die Verdrängungsausnehmung (9) im Querschnitt entlang der Mittelachse in einem ersten Abschnitt (12) als konisch verlaufendes Flächensegment und in einem zweiten Abschnitt (13) als gerundetes Flächensegment erstreckt.

7. Biegevorrichtung (1) nach einem der vorhergehenden Ansprüche, **dadurch gekennzeichnet, dass** die Biegematrize (3) zweiteilig mit einem ersten Matrizenteil (14) und einem zweiten Matrizenteil (15) ausgebildet ist.

8. Biegevorrichtung (1) nach Anspruch 7, **dadurch gekennzeichnet, dass** das erste Matrizenteil (14) auf einer Seite einer imaginären Ebene (E) liegt und dass das zweite Matrizenteil (15) auf einer anderen Seite der imaginären Ebene (E) liegt, wobei die imaginäre Ebene (E) sich rechtwinklig zur Mittelachse (M) und mittig durch den Aufnahmeraum (6) hindurch erstreckt.

9. Biegevorrichtung (1) nach Anspruch 7 oder 8, **dadurch gekennzeichnet,**
**dass** jedes Matrizenteil (14, 15) die mindestens eine Biegefläche (8) aufweist; wobei entweder jedes Matrizenteil (14, 15) die mindestens eine Verdrängungsausnehmung (9) aufweist, oder wobei nur eines der beiden Matrizenteile (14, 15) die mindestens eine Verdrängungsausnehmung (9) aufweist; oder
**dass** nur eines der beiden Matrizenteile (14, 15) die mindestens eine Verdrängungsausnehmung (9) aufweist; wobei entweder jedes Matrizenteil (14, 15) die mindestens eine Biegefläche (8) aufweist, oder wobei nur eines der beiden Matrizenteile die mindestens eine Biegefläche (8) aufweist.

10. Biegevorrichtung (1) nach einem der Ansprüche 7 bis 9, **dadurch gekennzeichnet, dass** die beiden Matrizenteile (14, 15) über eine Führungsstruktur (16) bewegbar zueinander miteinander in Verbindung stehen, wobei die beiden Matrizenteile (14, 15) über eine Betätigungsanordnung (17) mit einem Betätigungselement (18) aufeinander zu bewegbar sind, und wobei die Führungsstruktur (16) vorzugsweise ein Rückstellelement (19) aufweist, welches die beiden Matrizenteile (14, 15) voneinander weg drückt.

11. Biegevorrichtung (1) nach einem der vorhergehenden Ansprüche 7 bis 10, **dadurch gekennzeichnet, dass** die Matrizenteile (14, 15) vor dem Einlegen des Rohrs (R) in den Aufnahmeraum (6) in einer Ausgangslage liegen und dass die Matrizenteile (14, 15) vor dem Biegevorgang in eine Biegelage aufeinander zu bewegt werden, derart, dass die Isolation (I) des eingelegten Rohrs (R) teilweise komprimiert wird und teilweise in die Verdrängungsausnehmung gedrückt wird, und dass das Rohr (R) durch die Matrizenteile (14, 15) geklemmt wird.

12. Biegevorrichtung (1) nach Anspruch 11, **dadurch gekennzeichnet, dass** die Matrizenteile (14, 15) in der Biegelage beabstandet zueinander liegen oder über Kontaktflächen (20) miteinander in Kontakt bringbar sind.

13. Biegevorrichtung (1) nach einem der Ansprüche 10 bis 12 oder Betätigungsanordnung (17) mit einem Betätigungselement (18) zur Bereitstellung einer Bewegung zwischen einem ersten Matrizenteil (14) und einem zweiten Matrizenteil (15),
wobei die Betätigungsanordnung (17)
eine sich entlang einer Lagerstangenachse (L) erstreckende Lagerstange (21), die über einen Lagerabschnitt (22) mit dem ersten Matrizenteil (14) in Verbindung steht und sich durch eine Öffnung (23) am zweiten Matrizenteil (15) hindurch erstreckt, und
eine Schwenkstange (24), die sich entlang einer Schwenkstangenachse (S) erstreckt und die gegenüber dem Lagerabschnitt (22) an der Lagerstange (21) anordnet ist, umfasst,
wobei die Schwenkstangenachse (S) rechtwinklig zur Lagerstangenachse (L) verläuft,
dass das Betätigungselement (18) schwenkbar mit der Schwenkstange (24) in Verbindung steht,
wobei das Betätigungselement (18) eine Kontaktfläche (25) aufweist, mit welcher das Betätigungselement (18) auf eine Aktuatorfläche (26) am zweiten Matrizenteil (15) wirkt, wobei die Kontaktfläche (25) mindestens zwei Flächensegmente (27, 28) aufweist, deren Abstand zur Schwenkstangenachse (S) unterschiedlich ist, derart, dass wenn das eine Flächensegment (27) mit der Aktuatorfläche (26) in Kontakt ist, der Abstand zwischen den Matrizenteilen (14, 15) unterschiedlich ist, als wenn ein anderes der Flächensegmente (28) mit der Aktuatorfläche (26) in Kontakt ist.

14. Biegevorrichtung (1) oder Betätigungsanordnung (17) nach Anspruch 13, **dadurch gekennzeichnet,**
**dass** das Betätigungselement (18) einen Hebelabschnitt (29) aufweist und/oder
**dass** die Flächensegmente (27, 28) als ebene oder als gerundete Flächensegmente ausgebildet sind; und/oder
**dass** zwischen den Flächensegmenten (27, 28) eine Übergangsfläche (30) angeordnet ist, wobei die Übergangsfläche (30) mit einer Rundung gerundet ausgebildet ist, wobei die Rundung derart ausgebildet ist, dass der Abstand zwischen der Rundung und der Schwenkstangenachse (S) sich zwischen den beiden Flächensegmenten (27, 28) vorzugsweise kontinuierlich verändert.

15. Biegevorrichtung (1) oder Betätigungsanordnung (17) nach Anspruch 13 oder 14, **dadurch gekennzeichnet, dass** das Betätigungselement (18) mindestens eine Markierung (31) aufweist, welche bei entsprechender Stellung des Betätigungselements (18) den Abstand zwischen den beiden Matrizenteilen (14, 15) vorgibt.
